# EUROPEAN PATENT APPLICATION

(11) **EP 0 794 216 A1**
(43) Date of publication of application: **10.09.1997**
(21) Application number: 96810147.7
(22) Date of filing: 08.03.1996
(51) Int. Cl.: C08J 11/04

(54) **Process for regeneration of recycled polyvinylchloride**

(71) Applicant: Pheniplastics S.A., 9496 Balzers (LI)
(72) Inventor: Boulgakov, Viktor, Tbilisi (GE); Pikous, Eugeni, Tbilisi (GE); Djavakhichvili, Gueorguie, Tbilisi (GE)
(74) Representative: Groner, Manfred

(57) **Abstract**

A process for reclamation of recycled polyvinylchloride comprises plasticization of recycled polyvinylchloride preliminarily washed of dirt and disintegrated, under constant stirring at a temperature of 60 - 80°C, using a plasticizer containing not more than 11 wt.% of polyorganosiloxane, followed by modification of recycled polyvinylchloride at a temperature of 60 - 80°C with a 4 - 12% solution of a structure-forming agent in stearin, whereupon the resultant modified polyvinylchloride is granulated at a temperature of 150 - 170°C.

## Description

### Technical Field

The present invention relates in general to plastics technology, more specifically to polyvinylchloride processing techniques, and has particular reference to a process for reclaiming recycled polyvinylchloride.

### Background Art

At present elaboration of waste polymer recovery processes and, more desirable, of reclamation used-up waste polymers, as well as of waste products of processing thereof for comprehensive reuse is one of the most important problems in the up-to-date polymer technology.

No processes for reprocessing polyvinylchloride exist nowadays; that is why recycled polyvinylchlorides either are subject to burying or are to be incinerated. In both cases environmental pollution results, as well as ecological disturbance of the areas where polyvinylchlorides are reprocessed (of. "Neutralization and reclamation of plastic production waste products" by Bystrov, Galperin, and Titov, Khimia Publishers, Leningrad, 1982 pp.179, 181 (in Russian).

### Disclosure of the Invention

The present invention has for its principal object to provide a process for reclamation of recycled polyvinylchloride, which ensures production of high thermal stability polymer amenable to subsequent repeated processing.

The foregoing object is accomplished due to the fact that in a process for reclamation of recycled polyvinylchloride, according to the invention, recycled polyvinylchloride that has preliminarily been washed of dirt and disintegrated, is subjected to consecutive plastisizing, under constant stirring, at 60 - 90°C, preferably 60 - 80 °C, with a plasticizer containing not over 11 wt.% of polyorganosiloxane, followed by modification, at 60 - 80°C with a 4 - 12% solution of a structure-forming agent in stearin, whereupon the resultant modified polyvinylchloride is subjected to granulation at 150 - 170°C.

The invention enables one to reclaim recycled polyvinylchloride and produce a thermostable polymer amenable to repeated processing.

According to the present invention, it is expedient that the aforesaid plasticizer be used in an amount of 25 - 45% of the total weight of the recycled polyvinylchloride.

It is also expedient, according to the present invention, that used as said plasticizer is the compound selected from the group, consisting of dibutylphthalate, dioctylphthalate, and dibutylsebacinate.

According to the present invention, it is expedient that used as said polyorganosiloxane is the compound selected from the group, consisting of polymethylsiloxane, polyethylsiloxane, and polymethylphenylsiloxane.

According to the present invention, it is expedient that said structure-forming agent be used in an amount of from 1 to 3% of the whole weight of the polyvinylchloride being reclaimed.

It is further expedient, according to the present invention, that used as said structure-forming agent is the compound selected from the group of silanes, consisting of phenylaminomethylmethyldiethoxysilane, gamma-aminopropyltriethoxysilane, and diphenylsilanediol.

Further objects and advantages of the proposed invention will become apparent from the following detailed description of a process for reclamation of recycled polyvinylchloride and some specific exemplary embodiments of said method.

### Best Method of Carrying out the Invention

According to the present invention, there is carried out reclamation of polyvinylchloride that has lost its original properties as a result of ageing of the various kinds, as well as of used-up polyvinylchloride products.

Taking account of the fact that recycled polyvinylchloride is usually badly soiled it is to be washed with standard detergents having preliminarily disintegrated them in crushers until particles sized up to 10 mm are obtained.

According to the present invention, the polyvinylchloride washed of dirt and dried is subjected to plastisizing under constant stirring at 60 - 90°C, preferably 60 - 80 °C.

Used as a plasticizer is predominantly a polyester one, such as dibutylphthalate, dioctylphthalate, or dibutylsebacinate wherein, according to the invention, a liquid polyorganosiloxane is preliminarily dissolved, such as polymethylsiloxane, polyethylsiloxane, or polymethylphenylsiloxane. An amount of siloxane to be dissolved in the above plasticizer should be such as to satisfy the condition of complete siloxane absorption by the plasticizer, being as a rule not in excess of 11 wt.%. The process of dissolving liquid polyorganosiloxane in the plasticizer is conducted under stirring at approximately 100°C. Polyorganosiloxanes serve as structure-forming polyvinylchloride plasticizers and, moreover, they restrict the degree of polyvinylchloride swelling in the plasticizer.

It is expedient that the polyester plasticizer used be introduced into the polymer in an amount of 25 - 45% of the whole weight of the latter. Such an amount of the plasticizer is optimal.

It is noteworthy that the condition of complete absorption of the siloxane-dissolved plasticizer by the polymer defines the temperature and duration of this stage of the proposed process.

On completion of processing the recycled polyvinylchloride with the plasticizer the recycled polymer is modified by adding a structure-forming agent thereto. According to the present invention, with a view to increasing the homogenicity of the mixture and providing a required hardness of the reclaimed polyvinylchloride, said structure-forming agent is selected predominantly of the group of silanes, consisting of phenylaminomethylmethyldiethoxysilane, gamma-aminopropyltriethoxylsilane, diphenylsilanediol (with the exception of chlorosilane), and is used as a 4 - 12% solution in stearin. An optimum structure-forming agent content of the polymer ranges from 1 to 3 wt.%.

Modification is conducted under constant stirring of the reaction mixture at 60 - 80°C.

Next the resultant composition is homogenized and granulated. The finished product thus obtained is a graft copolymer featuring an increased thermal stability amenable to repcated processing.

### Example 1

Sorted out recycled polyvinylchloride is disintegrated in milling crushers. The crushed products are washed of dirt, using dinaphtalenesulfonate, at 70 - 80°C.

The thus-preconditioned recycled polyvinylchloride is loaded in a drum-type mixer, after which a mixture of dibutylphthalate (40 wt.%) and liquid polyethylsiloxane (9% of the whole weight of dibutylphthalate) is inserted into the mixer. Then the mixer contents are subjected to intermixing by drum rotation for a two-hour period until a complete absorption of a dibutylphthalatesiloxane mixture by polyvinylchloride is attained.

Then a 4% solution of phenylaminomethyl-methyldiethoxysilane in stearin is added to the mixer contents in an amount of 3% of the weight of polyvinylchloride.

Then the mixer contents are intermixed for 30 minutes at 60°C. The resultant composition is forwarded for homogenization and granulation in an extruder at 150 - 170°C.

The resultant granulate is an original raw stock for production of high-strength compositions and products.

For the physicomechanical characteristics of the finished product refer to Table 1.

### Example 2

Recycled polyvinylchloride is subjected to reclamation under conditions similar those of Example 1, with the exception that 40 wt.% of dibutylsebacinate mixed with liquid polymethylsiloxane taken in an amount of 11% of the weight of dibutylsebacinate, is placed in a mixer containing disintegrated polyvinylchloride washed of dirt. Once the mixture of dibutylsebacinate with polymethylsiloxane has been absorbed completely by polyvinylchloride, a 10% solution of diphenylsilanediol in stearin taken in an amount of 3% of the weight of polyvinylchloride is inserted into the mixer.

The physicomechanical characteristics of the resultant product are tabulated in Table 1.

### Example 3

Recycled polyvinylchloride is reclaimed under conditions similar to those of Example 1. A mixer containing some disintegrated and washed polyvinylchloride is loaded with 25 wt.% of dioctylsebacinate mixed with liquid polymethylsiloxane taken in an amount of 7% of the weight of sebacinate. After polyvinylchloride has absorbed completely a mixture of dioctylsebacinate with polymethylsiloxane, a 8% solution of diphenylsilanediol in stearin in an amount of 3% of the weight of polyvinylchloride, is inserted into the mixer.

The physicomechanical characteristics of the resultant product are presented in Table 1.

### Example 4

Recycled polyvinylchloride is reclaimed under conditions similar to those of Example 1. A mixer containing some disintegrated and washed polyvinylchloride is loaded with 40 wt.% of dioctylphthalate mixed with liquid polymethylphenylsiloxane taken in an amount of 10% of the weight of dioctylphthalate. After polyvinylchloride has absorbed completely a mixture of dioctylphthalate with polymethylphenylsiloxane, a 10% solution of gamma-aminopropyltriethoxysilane in stearin in an amount of 3% of the weight of polyvinylchloride, is introduced into the mixer.

The physicomechanical properties of the resultant product are contained in Table 1.

### Example 5

Recycled polyvinylchloride is reclaimed under conditions similar to those of Example 1. A mixer containing some disintegrated and washed polyvinylchloride is loaded with 45 wt.% of dioctylphthalate mixed with liquid polymethylphenylsiloxane taken in an amount of 40% by weight of dioctylphthalate. After polyvinylchloride has absorbed completely a mixture of dioctylphthalate with polymethylphenylsiloxane, a 5% solution of gamma-aminopropyltriethoxysilane in stearin in an amount of 1% of the weight of polyvinylchloride is added into the mixer.

The physicomechanical characteristics of the resultant product are indicated in Table 1.

**Table 1**

| Characteristics of Reclaimed Recycled Polyviylchloride | | | | | |
|---|---|---|---|---|---|
| Characteristics | Examples | | | | |
| | 1 | 2 | 3 | 4 | 5 |
| Density, g/cm³ | 1.3 | 1.2 | 1.2 | 1.2 | 1.2 |
| Melt flowability index, g/10 min | 50 | 50 | 55 | 55 | 50 |
| Ultimate tensile strength, MPa | 20-22 | 22-24 | 26-28 | 28-30 | 23-25 |
| Ultimate elongation, % | 500 | 560 | 600 | 600 | 450 |
| Elastic modulus, MN/m² | 8000 | 8000 | 11000 | 12000 | 9000 |
| Specific impact strength, kJ/m² | 12 | 12 | 14 | 16 | 12 |
| Vicat's softening point, T°C | 85 | 85 | 85 | 90 | 80 |

### Industrial Applicability

The present invention can find application in making compositions for producing diverse shaped articles and pipes having high mechanical strength and chemical stability, as well as compounds for making products having increased elastoviscous characteristics, e.g., for manufacture of storage-battery containers, or motor-vehicle bumpers.

## Claims

1. A process for reclamation of recycled polyvinylchloride, **characterized** in that a preliminarily washed and disintegrated recycled polyvinylchloride is subjected, under constant stirring, to consecutive operations, first to plasticization at a temperature of 60 - 90°C, preferably 60 - 80 °C, with a plasticizer containing not more than 11 wt.% of polyorganosiloxane, then to modification at a temperature of 60 - 80°C with a 4 -12% solution of a structure-forming agent in stearin, after which the resultant modified polyvinylchloride is granulated at a temperature of 150 - 170°C.

2. A process as claimed in Claim 1, **characterized** in that said plasticizer is used in an amount of 25 - 45% by weight of polyvinylchloride.

3. A process as claimed in Claim 1, **characterized** in that used as a plasticizer is the polyester compound selected from the group consisting of dibutylphthalate, dioctylphthalate, and dibutylsebacinate.

4. A process as claimed in Claim 1, **characterized** in that used as a polyorganosiloxane is the substance selected from the group consisting of polymethylsiloxane, polyethylsiloxane, and polymethylphenylsiloxane.

5. A process as claimed in Claim 1, **characterized** in that the structure-forming agent is used in an amount of from 1 - 3% by weight of the polyvinylchloride being reclaimed.

6. A process as claimed in Claim 1, **characterized** in that used as the structure-forming agent is the compound selected from the group of silanes, consisting of phenylaminomethylmethyldiethoxysilane, gamma-aminopropyltriethoxysilane, and diphenylsilanediol.

7. Polymeric material manufactured according to Claim 1, characterized in that polyorganosiloxane molecules are grafted to the molecules of polyvinylchloride and that the grafting is at active centres of the polymer being treated.

8. Polymeric material manufactured according to Claim 7, characterized in that the active centres are unsaturated bonds, tertiary hydrocarbon atoms or oxygen-containing groups.

9. Polymeric material according to Claim 7 or 8, characterized in that it contains a finely dispersed inactive filler.
